# EUROPÄISCHE PATENTSCHRIFT

(11) **EP 2 250 058 B1**
(45) Veröffentlichungstag und Bekanntmachung des Hinweises auf die Patenterteilung: **02.05.2012**
(21) Anmeldenummer: 08872223.6
(22) Anmeldetag: 19.11.2008
(51) Int. Cl.: B60W 10/06, B60W 10/08, B60W 20/00, B60W 10/02, B60W 50/02

(54) **VERFAHREN ZUM AUSFALLSICHEREN BETREIBEN EINES HYBRIDFAHRZEUGS ZUM KONTROLLIERTEN HERVORRUFEN VON EINER EINEN NOTLAUF DES FAHRZEUGS ERMÖGLICHENDEN ERSATZMASSNAHME UND VORRICHTUNG ZUM DURCHFÜHREN DIESES VERFAHRENS**
METHOD FOR THE FAILSAFE OPERATION OF A HYBRID VEHICLE FOR INITIATING, IN A CONTROLLED MANNER, A SUBSTITUTE MEASURE ALLOWING AN EMERGENCY OPERATION OF THE VEHICLE AND DEVICE FOR CARRYING OUT SAID METHOD
PROCÉDÉ POUR FAIRE FONCTIONNER À SÉCURITÉ INTÉGRÉE UN VÉHICULE HYBRIDE AFIN DE PROVOQUER DE MANIÈRE CONTRÔLÉE UNE MESURE DE SECOURS PERMETTANT UN FONCTIONNEMENT DE SECOURS DU VÉHICULE, ET DISPOSITIF POUR LA MISE EN UVRE DE CE PROCÉDÉ

(30) Priorität: 07.02.2008 DE 102008008207
(43) Veröffentlichungstag der Anmeldung: 17.11.2010
(73) Patentinhaber: Robert Bosch GmbH, 70442 Stuttgart (DE)
(72) Erfinder: ROLLMANN, Ute, 70499 Stuttgart (DE); AHNER, Peter, 71032 Boeblingen (DE); BILDSTEIN, Michael, 70469 Stuttgart (DE); LEHNER, Michael, 75446 Wiernsheim (DE); REBER, Felix, 71636 Ludwigsburg (DE); KAEFER, Oliver, 71711 Murr (DE)
(86) Internationale Anmeldenummer: PCT/EP2008/065798
(87) Internationale Veröffentlichungsnummer: WO 2009/097923

(56) Entgegenhaltungen:
- WO-A-2007/088429
- WO-A-2008/037769
- DE-A1- 10 316 422
- DE-A1- 19 544 021
- JP-A- 10 073 161
- JP-A- 2002 285 905

## Beschreibung

### Stand der Technik

Die Erfindung betrifft ein Verfahren zum ausfallsicheren Betreiben eines Hybridfahrzeuges mit einem Verbrennungsmotor, einem Elektromotor und weiteren Fahrzeugaggregaten, wobei bei einem Ausfall oder einer Betriebsseinschränkung eines Fahrzeugaggregates eine dann noch einen Notlauf des Fahrzeugs ermöglichende Ersatzmaßnahme hervorgerufen wird.

Die Erfindung betrifft auch eine Vorrichtung umfassend Mittel zum Durchführen eines solchen Verfahrens.

Aus dem Stand der Technik sind Hybridfahrzeuge bekannt. Unter Hybridfahrzeugen werden sog. Mikro-Hybridfahrzeuge, Mild-Hybridfahrzeuge und Voll-Hybridfahrzeuge verstanden. Dabei sind landgebundene Kraftfahrzeuge umfasst, die zumindest einen Verbrennungsmotor, nämlich einen Ottomotor und/oder einen Dieselmotor aufweisen. Ferner weisen solche Hybridfahrzeuge auch einen Elektromotor auf.

Bereits auf dem Markt befindliche Fahrzeuge sind etwa der BMW 1er stellvertretend für ein Mikro-Hybridfahrzeug, der Honda Civic, stellvertretend für ein Mild-Hybridfahrzeug und der Toyota Prius, stellvertretend für ein Voll-Hybridfahrzeug. Auch andere Hersteller bieten vergleichbare Hybridfahrzeuge an.

Während ein Mikro-Hybridfahrzeug lediglich über eine Auto-Start-Stopp-Funktion und eine Bremsenenergierückgewinnungsfunktion zum Laden einer Starterbatterie aufweist, wobei eine Elektromaschine nicht zum Antrieb des Fahrzeugs benutzt wird, unterstützt bei Mild-Hybridfahrzeugen eine Elektromaschine, also eine Vorrichtung, die sowohl als Generator, als auch als Motor benutzt werden kann, den Verbrennungsmotor zur Leistungssteigerung oder zur Effizienzsteigerung. Im Stand der Technik wird das Leistungssteigern auch als "Boosten" bezeichnet.

Wie auch bei einem Mikro-Hybridfahrzeug, kann bei einem Mild-Hybridfahrzeug die Rückgewinnung von Bremsenergie, also die Rekuperation vollzogen werden.

Anders als bei den vorhergehend kurz beleuchteten Hybridversionen, wird bei einem Voll-Hybridfahrzeug mittels der elektromotorischen Leistung das Fahrzeug direkt angetrieben.

Beim Betrieb von Hybridfahrzeugen, ist es, wie bei jedem anderen Fahrzeug möglich, dass ein Defekt eines Fahrzeugaggregates, wie etwa von Kupplungen, Getrieben, Bremseinrichtungen oder sonstigen mechanischen oder elektromechanischen Elementen auftritt. Um es dem Fahrzeugführer bei einem solchen Defekt zu ermöglichen, wenigstens das Fahrzeug aus einer Gefahrenzone, wie etwa einer Kreuzung oder der Autobahn, fahren zu können, und/oder eine Werkstatt zu erreichen, ist es bekannt, Notlauffunktionen durch Ersatzmaßnahmen einzuleiten.

Aus der DE 103 16422 A1 ist etwa eine Steuerstrategie für Hybridfahrzeuge vorgeschlagen. Dort ist auch ein Zuschalten eines Elektromotors zu einem Verbrennungsmotor offenbart, wobei das Zuschalten ruckfrei geschehen soll.

Es ist nämlich beim Auslösen oder Hervorrufen von Ersatzmaßnahmen negativ zu vermerken, dass meistens ein Momentensprung an den Antriebsrädern auftritt. Wird die Notlauffunktion mittels der Ersatzmaßnahmen in einem solchen Fall hervorgerufen, in dem das Fahrzeug sowieso in einem fahrdynamisch kritischen Zustand befindlich ist, führt dies zu einer Gefährdung des Fahrzeuges, da bspw. das Fahrzeug in einer Kurvenfahrt oder auf glatter Fahrbahn dann ausbrechen kann und damit eine Gefährdung für die Fahrzeuginsassen und Dritte darstellt.

Ein Verfahren gemäβ dem Oberbegriff des Anspruchs 1 ist aus JP 2002 285 905 A bekannt.

### Offenbarung der Erfindung

### Vorteile der Erfindung

Die der Erfindung zugrunde liegende Aufgabe wird dadurch gelöst, dass zum Erfassen der fahrdynamischen Situation die Querbeschleunigung des Fahrzeugs erfasst und mit einem Grenzwert verglichen wird. Typische Fahrzustände werden erkannt und das Einleiten von Ersatzmaßnahmen, zum Sicherstellen einer Notlauffunktion werden unterbunden oder zumindest verzögert. Es ist daher nicht notwendig, auf das Hervorrufen jeglicher Ersatzmaßnahmen zu verzichten, nur weil in einigen speziellen Fahrsituationen eine Gefährdung auftreten könnte.

Dadurch werden bestimmte Notlaufmaßnahmen bei fahrdynamisch kritischen Zuständen unterbunden.

Die Verfügbarkeit des Fahrzeuges wird dadurch erhöht. Auch kann der Fahrzeugführer mit dem defekten Fahrzeug immer noch zumindest die nächstgelegene Werkstatt erreichen. Das Entfernen des Fahrzeugs aus dem Gefahrenbereich, wie von einer Kreuzung oder der Autobahn, ist dem Fahrzeugführer, auch wenn ihm keine fremde Hilfe zur Verfügung steht, zumindest noch mit eigener Kraft möglich. Bei der erfindungsgemäßen Ausstattung von Fahrzeugen, erhöht sich auch die Robustheit der Fahrzeuge, was auch insbesondere für die Hersteller der Fahrzeuge von Vorteil ist, da sich die Platzierung der Fahrzeuge in Pannenstatistiken verbessert.

Die Erfindung betrifft auch eine Vorrichtung, die geeignet ist, ein erfindungsgemäßes Verfahren mit geeigneten Mitteln durchzuführen.

Vorteilhafte Ausführungsformen werden in den Unteransprüchen beansprucht und nachfolgend näher erläutert.

Damit mit höherer Sicherheit bestimmbar ist, ob die jeweilige Situation, in der sich das Fahrzeug befindet, nach fahrdynamischen Kriterien kritisch ist, ist es von Vorteil, wenn zum Erfassen der fahrdynamischen Situation die Fahrzeuggeschwindigkeit und/oder der jeweilige Lenkwinkel erfasst und mit einem diesbezüglichen Grenzwert verglichen wird. Die Aussagegenauigkeit wird erhöht, was dazu führt, dass weniger häufig Notlauffunktionen mittels der diesbezüglichen Ersatzmaßnahmen nicht eingeleitet werden. Die Verfügbarkeit des Fahrzeuges erhöht sich dadurch weiterhin.

Wenn die Betriebsgröße von einem Steuergerät und/oder einem Fahrassistenzsystem, wie dem ESP-System, benutzt wird, so lassen sich ohne großen zusätzlichen Aufwand die notwendigen Bezugsgrößen abgreifen, um eine verlässliche Aussage über den im jeweiligen Augenblick vorherrschende fahrdynamische Situation treffen zu können. Gerade beim Abgreifen der Bezugsgröße aus einem ESP-System, kann verlässlich auf die Gierrate des Fahrzeugs oder dessen Querbeschleunigung geschlossen werden und somit eine hochbelastbare Aussage erfolgen. Da in bereits der Mehrzahl der auf dem europäischen Markt verkauften Fahrzeuge ESP-Systeme integriert sind, ist es besonders kostengünstig, die notwendige Betriebsgröße in einem entsprechenden Fahrerassistenzsystem vorliegenden ESP-System abzugreifen. Da auch entsprechende Steuergeräte in den meisten Fahrzeugen vorhanden sind, bieten sich diese ebenfalls an die notwendigen Daten zur Verfügung zu stellen um ein Verbauen zusätzlicher Sensoren zu vermeiden.

Das vom Verbrennungsmotor übertragbare Drehmoment lässt sich dann weiter nutzen, wenn bei Unterschreiten des Grenzwertes eine zwischen dem Verbrennungsmotor und dem Elektromotor angeordnete erste Kupplung geschlossen wird. Steht somit zum Antreiben des Fahrzeugs nicht genug elektromotorische Leistung zur Verfügung, so lässt sich dann der Verbrennungsmotor einfach zuschalten. Über dem Verbrennungsmotor ist auch vorteilhafterweise aufgrund der Zwischenschaltung des Elektromotors, der gegebenenfalls als Generator fungiert, ein Laden des Speichermediums für den Elektromotor, also bspw. einer Batterie, möglich. Dies erhält die Funktionalität des gesamten Fahrzeugs auf eine vorteilhafte Weise.

Es ist auch von besonderem Vorteil, wenn eine Unterscheidung zwischen Ersatzmaßnahmen, die die fahrdynamische Situation des Fahrzeugs beeinflussen und denen, die die fahrdynamische Situation des Fahrzeugs nicht beeinflussen, getroffen wird.

Wenn die Unterscheidung vor dem Vergleich der Betriebsgröße mit dem Grenzwert durchgeführt wird, so ist es möglich die Ersatzmaßnahmen derart zu klassifizieren, dass gegebenenfalls nur die für die Fahrdynamik kritischen Ersatzmaßnahmen unterbleiben. Die Verfügbarkeit des Fahrzeuges und die Möglichkeit bei Defekt zumindest eine Werkstatt zu erreichen, wird dadurch weiter verbessert.

Um Ressourcen und Zeit zu sparen, ist es weiter von Vorteil, wenn der Vergleich zwischen der Betriebsgröße und dem entsprechenden Grenzwert nur durchgeführt wird, wenn die Ersatzmaßnahme als die fahrdynamische Situation des Fahrzeugs beeinflussend identifiziert ist.

Wird eine Vorrichtung umfassend Mittel zum Durchführen des erfindungsgemäßen Verfahrens verwendet, so lässt sich ebenfalls die Verfügbarkeit des Fahrzeuges steigern, und eine entsprechende Nachrüstung von Fahrzeugen vornehmen.

Wenn ein Elektromotor auch als Generator betreibbar ist, so erhöht sich die Funktionalität und Vielseitigkeit des Fahrzeuges, insbesondere in Bezug auf die Energierückgewinnungsmöglichkeit im Bremsfall.

### Kurze Beschreibung der Zeichnungen

In den Figuren wird die Erfindung durch Veranschaulichung von Ausführungsbeispielen näher erläutert. Es zeigen:
- Figur 1: eine schematische Darstellung eines grundsätzlichen Aufbaus eines Hybridfahrzeuges, unter Verwendung entsprechender Fahrzeugaggregate und
- Figur 2: ein schematisches Diagramm zum Veranschaulichen der Verfahrensschritte.

### Ausführungsformen der Erfindung

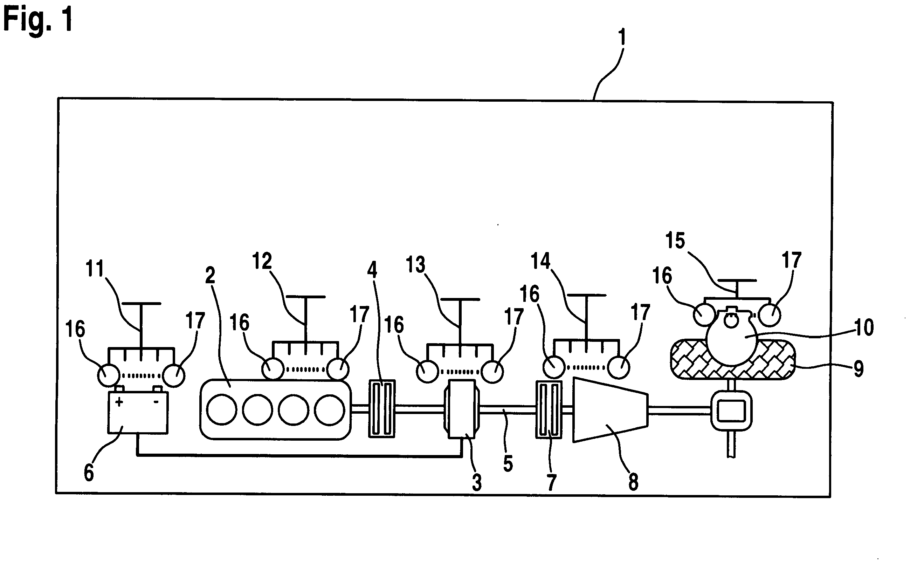

Figur 1 zeigt ein Hybridfahrzeug 1 mit einem Verbrennungsmotor 2 und einem Elektromotor 3. Zwischen dem Verbrennungsmotor 2 und dem Elektromotor 3 ist eine erste Kupplung 4 angeordnet. Die erste Kupplung 4 ist mit einer Antriebswelle 5, wobei das eine Ende der Antriebswelle 5 vom Verbrennungsmotor 2 antreibbar ist und ein davon mittels der ersten Kupplung 4 getrennter Bereich von dem Elektromotor 3 antreibbar ist. Der Elektromotor 3 ist auch als Generator betreibbar. Dieser Fall tritt dann auf, wenn von der ersten Kupplung 4 ein Drehmoment vom Verbrennungsmotor 2 über die Antriebswelle 5 zum Elektromotor 3 übertragen wird.

In einem solchen Fall erzeugt der als Generator agierende Elektromotor 3 elektrische Energie und lädt eine Batterie 6 auf.

Die Batterie 6 liefert im Elektro-Normalbetrieb die zum Betrieb des Elektromotors 3 notwendige Energie, nämlich zumindest in dem Fall, wenn der Verbrennungsmotor 2 nicht angetrieben ist. In einem solchen Fall ist normalerweise die erste Kupplung 4 nicht geschlossen. Allerdings ist die erste Kupplung 4 auch in einem solchen Fall schließbar, wie bereits vorab erläutert.

Das an dem verbrennungsmotorfernen Ende der Antriebswelle 5 anliegende Drehmoment wird mittels einer weiteren Kupplung 7 zu einem Getriebe 8 geleitet. Das im Regelfall gewandelte Drehmoment wird dann an Antriebsräder 9, von denen eines dargestellt ist, weitergeleitet. Das an den Antriebsrädern 9 anliegende Drehmoment führt zum Fortbewegen des Hybridfahrzeuges 1, relativ zu einem ortsfesten Bezugspunkt.

An den Rädern, insbesondere an den Antriebsrädern 9 sind Bremsvorrichtungen 10 angeordnet. An der Batterie 6 ist ein Batteriesteuergerät 11 angebracht.

Entsprechende Steuergeräte sind auch für den Verbrennungsmotor 2, den Elektromotor 3, das Getriebe 8 und die Bremsvorrichtung 10 vorgesehen. So ist ein Verbrennungsmotorsteuergerät 12, ein Elektromotorsteuergerät 13, ein Getriebesteuergerät 14 und ein Bremsvorrichtungssteuergerät 15 vorgesehen. Die Steuergeräte weisen jeweils einen Aktuator und einen Sensor auf. Dabei ist jeweils der Aktuator mit dem Bezugszeichen 16 und der Sensor mit dem Bezugszeichen 17 versehen.

Das Hybridfahrzeug kann unterschiedliche Schalt- und Verfahrenszustände einnehmen.

Einer der Normalfälle ist, dass die erste Kupplung 4 geschlossen wird, um den Verbrennungsmotor 2 zu starten.

Beim laufenden Verbrennungsmotor 2 ist es auch möglich, unter Heranziehung des vom Elektromotor 3 zur Verfügung gestellten Drehmomentes, die Antriebswelle 5, über das Vermögen des Verbrennungsmotors 2 hinaus kurzzeitig anzutreiben, also ein "Boosten" zu erreichen.

Falls ein Defekt eines Teilaggregates auftritt, z. B. eines Hydraulikstellers, so tritt der Spezialfall auf, dass obwohl ungewollt, die erste Kupplung 4 schließt. Auch kann ein Fahrzustand auftreten, dass im hydraulischen System Luft enthalten ist, was zu einem nicht vollständigen Öffnen der ersten Kupplung 4 führt. Wird dies durch entsprechende Diagnose mittels einer Sensorik, insbesondere unter Vergleich der Drehzahlen des Verbrennungsmotors und des Elektromotors sensiert, wird, um das Scheuern der Kupplungsteile aufeinander zu verhindern, und einen übermäßigen Verschleiß zu vermeiden, die erste Kupplung 4 zum Herstellen einer Notlauffunktion in einer entsprechenden Ersatzmaßnahme geschlossen. Allerdings führen diese beiden Aktionen, nämlich das Schließen der ersten Kupplung 4, zu einem Momentensprung. Dies rührt auch aufgrund der Massenträgheit des Verbrennungsmotors her.

Um ein Schließen der Kupplung 4 in einer kritischen Fahrsituation zu vermeiden, wird, obwohl dadurch der Verschleiß der nicht mehr richtig öffnenden ersten Kupplung vermieden würde, vor Durchführen der Ersatzmaßnahme (Schließen der ersten Kupplung 4), zum Erreichen der Notlauffunktion, eine Abwägung getroffen, ob eine fahrdynamisch kritische Situation vorliegt. Dazu wird die Querbeschleunigung des Fahrzeuges ermittelt und in Abhängigkeit von gegebenenfalls weiteren Betriebsgrößen, wie Fahrzeuggeschwindigkeit und Lenkwinkel, die Einleitung der kritischen Ersatzmaßnahme unterbunden oder verzögert.

Der Elektromotor 3, der hier wie erläutert auch als Elektromaschine agiert, wird bei einer anderen Ersatzmaßnahme, die eine Notlauffunktion erfasst, in einen aktiven Kurzschluss gebracht.

Allerdings ist durch das erfindungsgemäße Verfahren und eine entsprechende Vorrichtung verhindert, dass der Elektromotor 3 in einer ungeeigneten Situation ein für die jeweilige Fahrsituation schädliches Drehmoment in die Antriebswelle 5 eingebracht wird.

Ein Schleudern des Fahrzeuges oder ein Ausbrechen des Fahrzeuges wird verhindert.

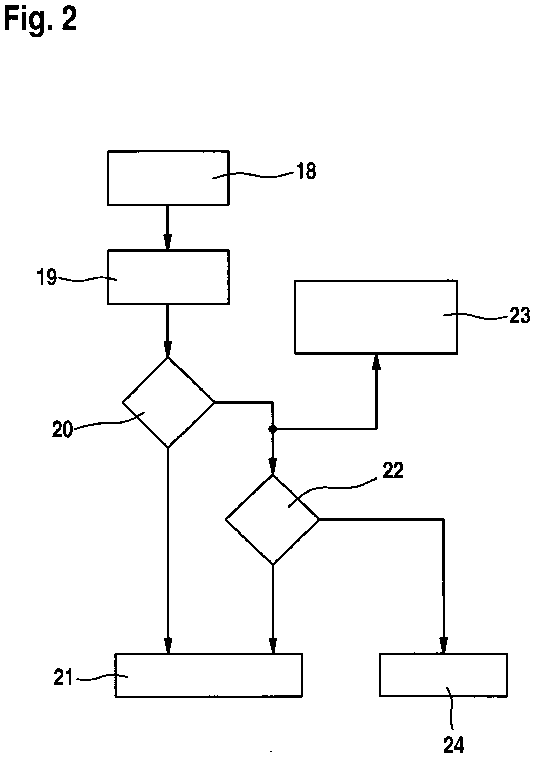

In Figur 2 ist ein Ablaufdiagramm in schematischer Form dargestellt.

In einem ersten Schritt 18 wird mittels einer Diagnosefunktion ein Defekt am Fahrzeug, der mittels Einleiten einer Ersatzmaßnahme behoben werden kann, detektiert. In einem nachfolgenden Schritt 19 wird die einzuleitende Ersatzmaßnahme ermittelt. Der Schritt 18 und der Schritt 19 sind in einer entsprechenden Rechenvorrichtung durchführbar.

In einem dritten nachfolgenden Schritt 20 wird eine Prüfung durchgeführt, ob die Ersatzmaßnahme als für die jeweilige fahrdynamische Situation kritisch einzustufen ist. Es wird hierin also eine Klassifikation abgefragt, ob die entsprechende Ersatzmaßnahme fahrdynamisch relevante Auswirkungen nach sich zieht. Ist die durchzuführende Ersatzreaktion fahrdynamisch unkritisch, so wird in einem nachfolgenden Schritt 21 die Ersatzmaßnahme eingeleitet.

Sollte die Prüfung im Schritt 20 jedoch ergeben, dass die durchzuführende Ersatzmaßnahme Auswirkungen auf die fahrdynamische Situation hat, die negative Auswirkungen nach sich zieht, also die Ersatzmaßnahme als für die Fahrdynamik kritisch eingestuft wird, so wird in einem separaten Prüfschritt 22 ein Vergleichen von einer charakteristischen Betriebsgröße mit entsprechenden Grenzwerten durchgeführt.

Die Grenzwerte, sind Schwellenwerte, die entweder vom Fahrzeugführer eingestellt sind, oder für das Fahrzeug voreingestellte Werte sind. Die entsprechenden Betriebsgrößen werden in einem vorgelagerten Schritt 23 ermittelt.

In diesem Schritt findet eine kontinuierliche Ermittlung der Betriebsgrößen, welche charakteristisch für die jeweilige fahrdynamische Situation sind, statt.

So wird etwa die Querbeschleunigung, die Fahrzeuggeschwindigkeit, die Fahrzeugbeschleunigung, der Lenkwinkel oder ähnliche Größen ermittelt. Die Querbeschleunigung wird bspw. durch ein ESP-System ermittelt. Die Querbeschleunigung lässt sich auch durch entsprechende Sensoren des Bremssystems, z. B. durch den Sensor 16 des Bremsvorrichtungssteuergerätes 15 abgreifen.

Liegt die entsprechende Betriebsgröße über dem Schwellenwert, so wird die Ersatzmaßnahme mit einem Schritt 24 nicht eingeleitet. Liegt die entsprechende charakteristische Betriebsgröße unter dem jeweiligen Grenzwert, so wird die den Notlauf gewährende Ersatzmaßnahme eingeleitet, nämlich in dem Schritt 21.

Der Vergleich der charakteristischen Betriebsgrößen, also z. B. der Querbeschleunigung, der Fahrzeuggeschwindigkeit, der Fahrzeugbeschleunigung und des Lenkwinkels, erfolgt separat oder kombiniert im Schritt 22.

Es ist festlegbar, ob das Überschreiten eines Schwellenwertes oder mehrer Schwellenwerte zu Schritt 24, also dem Nichteinleiten von Ersatzmaßnahmen, führt.

## Patentansprüche

1. Verfahren zum ausfallsicheren Betreiben eines Hybridfahrzeuges (1) mit einem Verbrennungsmotor (2), einem Elektromotor (3) und weiteren Fahrzeugaggregaten, wobei bei Ausfall oder Betriebsseinschränkung eines Fahrzeugaggregates eine dann noch einen Notlauf des Fahrzeugs ermöglichende Ersatzmaßnahme hervorgerufen wird, wobei vor Hervorrufens der Ersatzmaßnahme eine für die fahrdynamische Situation, in der sich das Fahrzeug befindet, charakteristische Betriebsgröße erfasst wird und mit zumindest einem Grenzwert verglichen wird, wobei die Ersatzmaßnahme bei Über- oder Unterschreiten des Grenzwertes hervorgerufen wird, **dadurch gekennzeichnet, dass** zum Erfassen der fahrdynamischen Situation die Querbeschleunigung des Fahrzeugs erfasst und mit einem Grenzwert verglichen wird.

2. Verfahren nach einem der Anspruch 1, wobei zum Erfassen der fahrdynamischen Situation die Fahrt der Geschwindigkeit und/oder der jeweilige Lenkwinkel erfasst und mit einem diesbezüglichen Grenzwert verglichen wird.

3. Verfahren nach einem der Ansprüche 1 bis 2, wobei die Betriebsgröße von einem Steuergerät (11, 12, 13, 14, 15) und/oder einem Fahrerassistenzsystem, wie einem ESP-System, genutzt wird.

4. Verfahren nach einem der Ansprüche 1 bis 3, wobei bei Unterschreiten des Grenzwertes eine zwischen dem Verbrennungsmotor (2) und dem Elektromotor (3) angeordnete erste Kupplung (4) geschlossen wird.

5. Verfahren nach einem der Ansprüche 1 bis 4, wobei eine Unterscheidung zwischen solchen Ersatzmaßnahmen getroffen wird, die die fahrdynamische Situation des Fahrzeugs beeinflussen und denen, die die fahrdynamische Situation des Fahrzeugs nicht beeinflussen.

6. Verfahren nach Anspruch 5, wobei die Unterscheidung vor dem Vergleich der Betriebsgröße mit dem Grenzwert durchgeführt wird.

7. Verfahren nach einem der Ansprüche 5 oder 6, wobei der Vergleich nur durchgeführt wird, wenn die Ersatzmaßnahme als die fahrdynamische Situation des Fahrzeugs beeinflussend identifiziert ist.

8. Vorrichtung umfassend Mittel zum Durchführen des Verfahrens nach einem der Ansprüche 1 bis 7.

9. Vorrichtung nach Anspruch 8, wobei der Elektromotor auch als Generator betreibbar ist.

## Claims

1. Method for the failsafe operation of a hybrid vehicle (1) having an internal combustion engine (2), an electric motor (3) and further vehicle assemblies, wherein in the case of failure or operational restriction of a vehicle assembly an alternative measure which still permits emergency running of the vehicle is brought about, wherein before the alternative measure is brought about an operational variable which is characteristic of the vehicle dynamic situation in which the vehicle finds itself is detected and compared with at least one limiting value, wherein the alternative measure is brought about when the limiting value is exceeded or undershot, **characterized in that** in order to detect the vehicle dynamic situation, the lateral acceleration of the vehicle is detected and compared with a limiting value.

2. Method according to Claim 1, wherein, in order to detect the vehicle dynamic situation, the speed of travel and/or the respective steering angle are detected and compared with a limiting value relating thereto.

3. Method according to one of Claims 1 to 2, wherein the operational variable is used by a control unit (11, 12, 13, 14, 15) and/or a driver assistance system such as an ESP system.

4. Method according to one of Claims 1 to 3, wherein, when the limiting value is undershot, a first clutch (4) which is arranged between the internal combustion engine (2) and the electric motor (3) is closed.

5. Method according to one of Claims 1 to 4, wherein a differentiation is made between alternative measures which influence the vehicle dynamic situation of the vehicle and those which do not influence the vehicle dynamic situation of the vehicle.

6. Method according to Claim 5, wherein the differentiation is carried out before the comparison of the operational variables with the limiting value.

7. Method according to one of Claims 5 or 6, wherein the comparison is carried out only if the alternative measure is identified as influencing the vehicle dynamic situation of the vehicle.

8. Device comprising means for carrying out the method according to one of Claims 1 to 7.

9. Method according to Claim 8, wherein the electric motor can also be operated as generator.

## Revendications

1. Procédé pour faire fonctionner, avec une sécurité intégrée, un véhicule hybride (1) équipé d'un moteur à combustion interne (2), d'un moteur électrique (3) et d'autres agrégats de véhicule, en cas de panne ou de perte d'entraînement d'un agrégat de véhicule, une mesure de remplacement permettant encore un fonctionnement de secours du véhicule étant instaurée, sachant qu'avant de mettre en place la mesure de remplacement, une grandeur fonctionnelle caractéristique de la situation de la dynamique de conduite dans laquelle se trouve le véhicule est détectée et comparée à au moins une valeur limite, la mesure de remplacement étant mise en place en cas de dépassement à la hausse ou à la baisse de la valeur limite, **caractérisé en ce que** la détection de la situation de la dynamique de conduite se fait en détectant l'accélération transversale du véhicule et en la comparant à une valeur limite.

2. Procédé selon la revendication 1, la détection de la situation de la dynamique de conduite utilisant la vitesse de conduite et/ou de l'angle de direction respectif et étant comparée à une valeur limite correspondante.

3. Procédé selon l'une quelconque des revendications 1 à 2, la grandeur fonctionnelle étant utilisée par un appareil de commande (11, 12, 13, 14, 15) et/ou un système d'aide à la conduite, tel qu'un système ESP.

4. Procédé selon l'une quelconque des revendications 1 à 3, un premier embrayage (4) disposé entre le moteur à combustion interne (2) et le moteur électrique (3) étant fermé en cas de dépassement à la baisse de la valeur limite.

5. Procédé selon l'une quelconque des revendications 1 à 4, une distinction étant faite entre les mesures de remplacement ayant une influence sur la situation de la dynamique de conduite du véhicule et celles n'ayant aucune influence sur la situation de la dynamique de conduite du véhicule.

6. Procédé selon la revendication 5, la distinction étant réalisée avant de comparer la grandeur fonctionnelle à la valeur limite.

7. Procédé selon l'une quelconque des revendications 5 ou 6, la comparaison n'étant réalisée que lorsque la mesure de remplacement est identifiée comme ayant une influence sur la situation de la dynamique de conduite du véhicule.

8. Dispositif comprenant des moyens de mise en oeuvre du procédé selon l'une quelconque des revendications 1 à 7.

9. Dispositif selon la revendication 8, le moteur électrique pouvant également servir de générateur.
